(19) Europäisches Patentamt
European Patent Office
Office européen des brevets

(11) **EP 4 650 718 A1**

(12) **EUROPÄISCHE PATENTANMELDUNG**

(43) Veröffentlichungstag:
**19.11.2025   Patentblatt 2025/47**

(21) Anmeldenummer: **24176717.7**

(22) Anmeldetag: **17.05.2024**

(51) Internationale Patentklassifikation (IPC):
**G01C 25/00** (2006.01)   **G01S 7/497** (2006.01)
**G01S 17/42** (2006.01)   **G01S 17/89** (2020.01)

(52) Gemeinsame Patentklassifikation (CPC):
**G01S 17/42; G01B 11/2504; G01B 21/042;**
**G01S 7/497; G01S 7/4972; G01S 17/89;**
**G01S 17/931**

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **SICK AG**
**79183 Waldkirch (DE)**

(72) Erfinder:
• **Schoen, Patrick**
  **79183 Waldkirch (DE)**
• **Walter, Stephan**
  **79215 Elzach-Yach (DE)**

(74) Vertreter: **Manitz Finsterwald**
**Patent- und Rechtsanwaltspartnerschaft mbB**
**Martin-Greif-Straße 1**
**80336 München (DE)**

(54) **VERFAHREN ZUR KALIBRIERUNG EINES SENSORSYSTEMS, SENSORSSYSTEM UND FÖRDEREINRICHTUNG**

(57)     Die vorliegende Erfindung betrifft ein Verfahren zur Kalibrierung eines Sensorsystems mit wenigstens einem Raumsensor (22) und wenigstens einem Geschwindigkeitssensor, insbesondere zur Kalibrierung eines Volumen-Mess-Systems, für Fördereinrichtungen. Ein entsprechendes Verfahren umfasst erfindungsgemäß zumindest die folgenden Schritte: Aufnahme von Referenzdaten bei einem leeren Erfassungsbereich des wenigstens einen Raumsensors (22) mittels des wenigstens einen Raumsensors (22); Beförderung eines quaderförmigen Testobjekts (40), das unterschiedliche Seitenlängen aufweist, in zwei unterschiedlichen relativen Positionen und Ausrichtungen durch den Erfassungsbereich des wenigstens einen Raumsensors (22) und Aufnahme entsprechender Messdaten; Ermittlung einer absoluten Ausrichtung des wenigstens einen Raumsensors (22) und/oder eines Korrespondenzfaktors für den Geschwindigkeitssensor basierend auf den ermittelten Referenz- und Messdaten mithilfe eines mathematischen Optimierungsalgorithmus. Ferner betrifft die vorliegende Erfindung auch zur Ausführung dieses Verfahrens ausgebildete Sensor- und Fördersysteme. Vorzugsweise umfasst das Sensorsystem zwei Raumsensoren (22) in Gestalt von LiDAR-Sensoren, welche auf die Förderfläche (F) ausgerichtet sind. Ein Geschwindigkeitssensor ist als Encoder ausgebildet und in den Antrieb der Fördereinrichtung integriert. Vorzugsweise wird das quaderförmig Testobjekt (40) in einer dritten unterschiedlichen relativen Position und Ausrichtung durch den Erfassungsbereich des wenigstens einen Raumsensors (22) befördert zur Aufnahme sowie Auswertung eines dritten Satzes entsprechender Messdaten. Damit ergibt sich für jede der drei Messdurchläufe eine unterschiedliche Höhe des Testobjekts (40), wobei jede dieser drei Höhen einer Seitenlänge des Testobjekts entspricht. Die Gesamtheit der Messdaten dieser drei Messdurchläufe erleichtert die Kalibrierung der Raumsensoren (40) und/oder des Geschwindigkeitssensors.

Fig. 3

EP 4 650 718 A1

**Beschreibung**

Die vorliegende Erfindung betrifft ein Verfahren, insbesondere ein computergestütztes oder ein computerimplementiertes Verfahren, zur Kalibrierung eines Sensorsystems, insbesondere eines Volumen-Mess-Systems, für Fördereinrichtungen, ein Speichermedium mit entsprechenden computerausführbaren Anweisungen, sowie ein entsprechendes Sensorsystem, insbesondere in Gestalt eines Volumen-Mess-Systems, und ein entsprechendes Fördersystem.

Herkömmlich erfolgt die Kalibrierung entsprechender Sensorsysteme manuell in einem statischen Zustand der Fördereinrichtung. Konkret bedeutet dies, dass jeder vorgesehene Sensor einzeln kalibriert wird. Bei Raumsensoren wird unter Kalibrierung vorliegend die Ermittlung der Position und Ausrichtung des jeweiligen Raumsensors verstanden. Dies erfolgt beispielsweise dadurch, dass für jeden vorgesehenen Raumsensor die Koordinaten von drei (linear unabhängigen) Punkten innerhalb der Sensorebene (aufgespannt durch die vom Sensor emittierten Signale; beispielsweise in Gestalt von Laserstrahlen bei LiDAR-Sensoren) von Hand gemessen werden. Dabei befinden sich typischerweise zwei der Punkte an der jeweiligen Fördereinrichtung und ein Punkt an einem Testobjekt auf einer Förderfläche der Fördereinrichtung. Ausgehend von diesen Koordinaten werden mathematisch die sechs Parameter, welche die Position und Ausrichtung des jeweiligen Raumsensors definieren, bestimmt. Die Ermittlung eines Korrespondenzfaktors für einen vorgesehenen Geschwindigkeitssensor erfolgt üblicherweise im Anschluss an die Kalibrierung der Raumsensoren. Hierfür wird typischerweise ein sehr langes Testobjekt mit bekannter Länge durch den Erfassungsbereich der Raumsensoren befördert und hieraus der entsprechende Korrespondenzfaktors, welcher das Signal des Geschwindigkeitssensors mit einer entsprechenden Geschwindigkeit des Testobjekts in Bezug setzt, errechnet.

Diese statische Kalibrierung von Hand ist nicht nur sehr zeitaufwendig, sondern auch fehleranfällig. Desweiteren können die unterschiedlichen Sensoren nur einzeln und nicht gemeinsam eingerichtet werden. Ferner führen Fehler bei der manuellen Kalibrierung der vorgesehenen Raumsensoren auch zu Fehlern bei der Kalibrierung des Geschwindigkeitssensors. In der Folge muss die Kalibrierung möglicherweise mehrfach vorgenommen bzw. korrigiert werden. Die notwendige Genauigkeit der Kalibrierung und schließlich des kalibrierten Sensor- bzw. Mess-systems ist damit in der Praxis nur schwer zu erreichen.

Es ist daher die der Erfindung zugrundeliegende Aufgabe, eine Möglichkeit zur Kalibrierung entsprechender Sensorsysteme bereitzustellen, welche schneller und weniger fehleranfällig als die herkömmliche manuelle Kalibrierung ist.

Diese Aufgabe wird durch das Verfahren gemäß Anspruch 1 gelöst. Vorteilhafte Weiterbildungen und Verwendungen dessen sind in den abhängigen Ansprüchen angegeben.

Erfindungsgemäß umfasst ein Verfahren zur Kalibrierung eines Sensorsystems mit wenigstens einem Raumsensor und wenigstens einem Geschwindigkeitssensor, insbesondere eines Volumen-Mess-Systems, für Fördereinrichtungen, zumindest die folgenden Schritte: die Aufnahme von Referenzdaten bei einem leeren Erfassungsbereich des wenigstens einen Raumsensors mittels des wenigstens einen Raumsensors; die Beförderung eines quaderförmigen Testobjekts in einer ersten relativen Position und Ausrichtung durch den Erfassungsbereich des wenigstens einen Raumsensors und Aufnahme eines ersten Satzes entsprechender Messdaten durch den wenigstens einen Raumsensor und den wenigstens einen Geschwindigkeitssensor; die Beförderung des quaderförmigen Testobjekts in einer zweiten relativen Position und Ausrichtung durch den Erfassungsbereich des wenigstens einen Raumsensors und Aufnahme eines zweiten Satzes entsprechender Messdaten durch den wenigstens einen Raumsensor und den wenigstens einen Geschwindigkeitssensor; die Ermittlung der unterschiedlichen Positionen und Ausrichtungen von zumindest drei Seiten des Testobjekts relativ zu dem wenigstens einen Raumsensor anhand der zwei Sätze von Messdaten vor dem Hintergrund der Referenzdaten; die Ermittlung einer relativen Ausrichtung des wenigstens einen Raumsensors relativ zu den besagten drei Seiten des quaderförmigen Testobjekts; die Ermittlung einer absoluten Ausrichtung des wenigstens einen Raumsensors und/oder eines Korrespondenzfaktors für den Geschwindigkeitssensor basierend auf den ermittelten Positionen und Ausrichtungen der zumindest drei Seiten des Testobjekts aus den wenigstens zwei Messdurchläufen mithilfe eines mathematischen Optimierungsalgorithmus.

Als "leerer" Erfassungsbereich wird vorliegend ein Erfassungsbereich ohne Testobjekt im Erfassungsbereich verstanden, womit die Referenzdaten effektiv ein "Hintergrundbild" der Fördereinrichtung darstellen. Die Position eines entsprechenden Raumsensors kann beispielsweise in Gestalt von drei Polarkoordinaten (oder drei kartesischen Koordinaten) ermittelt werden, während die Ausrichtung eines entsprechenden Raumsensors z.B. in Gestalt von drei Eulerwinkeln ermittelt wird. Als Position des Testobjekts wird vorliegend insbesondere die laterale Positionierung des Testobjekts quer zur Förderrichtung der Fördereinrichtung auf einer entsprechenden Förderfläche verstanden. Konkret ist damit zur Definition zwei unterschiedliche Positionen nicht relevant, ob das Testobjekt in der Förderrichtung näher oder weiter entfernt von dem Erfassungsbereich des wenigstens einen Raumsensors auf die Fördereinrichtung gelegt wird. Relevant ist lediglich, auf welcher Höhe das Testobjekt den jeweiligen Erfassungsbereich passiert. Die Ausrichtung des Testobjekts umfasst beispielsweise bei einem Förderband sowohl die Wahl derjenigen Seite des Testobjekts, auf welcher dieses auf einer entsprechenden Förderfläche steht, als auch die rotative Ausrichtung des Testobjekts um eine Normale der Förderfläche herum. Die rotative Ausrichtung des Testobjekts um die Normale der Förderfläche ist beispielsweise durch den kleinsten Winkel der unterschiedlichen Flächennormalen der Seiten des Testobjekts relativ zur Förderrichtung bestimmt. Die Position und Ausrichtung von Seiten des Testobjekts kann beispielsweise durch deren Flächennormalen und jeweils einen entsprechenden, ggf. gemeinsamen, Aufhängepunkt bestimmt werden. Zur Ermittlung der absoluten Ausrichtung des wenigstens einen Raumsensors und/oder des Korrespondenzfaktors werden die aufgenommenen Referenzdaten und Messdaten in ein geeignetes Modell eingespeist, welches auf der Annahme basiert, dass es sich bei dem Testobjekt um ein quaderförmiges Testobjekt handelt. Als quaderförmig wird vorliegend insbesondere ein Testobjekt verstanden, welches drei unterschiedliche Seitenlängen aufweist. Die schließlich ermittelte absolute Ausrichtung des wenigstens einen Raumsensors und/oder des Korrespondenzfaktors ergibt sich schließlich aus der besten Vereinbarkeit der Messdaten der unterschiedlichen Messdurchläufe bei einer angenommenen einheitlichen Ausrichtung der Raumsensoren und/oder bei einem als fest angenommenen Korrespondenzfaktor für den Geschwindigkeitssensor für die unterschiedlichen Messdurchläufe.

Das dadurch definierte dynamische Verfahren zur Kalibrierung des Sensorsystems ist weitestgehend automatisiert und kommt ohne aufwändige und fehleranfällige manuelle Messungen durch einen Benutzer aus. Es ist damit vergleichsweise schnell durchführbar und wenig fehleranfällig. Insbesondere ist damit nicht mehr der Einsatz von Fachpersonal zur Einrichtung des Sensorsystems notwendig.

Bevorzugt umfasst der wenigstens eine Raumsensor wenigstens zwei, insbesondere zwei oder drei, unterschiedlich positionierte und bevorzugt auch unterschiedlich ausgerichtete, Raumsensoren. Die Erfassungsbereiche der besagten Raumsensoren schneiden sich und/oder überlappen miteinander in bevorzugter Weise.

Eine Mehrzahl von Raumsensoren ermöglicht die umfassende räumliche Abbildung von Objekts, welche durch einen Erfassungsbereich dieser bewegt werden. Dies ermöglicht schließlich eine umfassende Analyse der jeweiligen Objekte. Ein Überschnitt und/oder eine Überlappung der Erfassungsbereiche der Mehrzahl von Raumsensoren erleichtert die kombinierte Auswertung der Messdaten der einzelnen Raumsensoren.

Bevorzugt ist der wenigstens eine Raumsensor, insbesondere jeder der vorgesehenen Raumsensoren, in einem Winkel zwischen 45° und 90°, beispielsweise in einem Winkel von 60°, auf eine Förderfläche der Fördereinrichtung, auf welcher das Testobjekt durch den Erfassungsbereich des wenigstens einen Raumsensors bewegt wird, ausgerichtet.

Insbesondere schaut der wenigstens eine Raumsensor anschaulich gesprochen von schräg oben und von vorne (entgegen einer Förderrichtung) auf Objekte, welche den Sensorbereich des jeweiligen Raumsensors passieren. Dies ermöglicht die zuverlässige Abbildung von zumindest 3 Seiten von quaderförmigen Objekten, welche den jeweiligen Sensorbereich passieren mittels jedes einzelnen der vorgesehenen Raumsensoren. Dies erlaubt nicht nur die Reduktion der Zahl vorzusehender Raumsensoren zur umfassenden Abbildung entsprechender Objekte, sondern aufgrund von Redundanzeffekten auch eine zuverlässigere und genauere Bestimmung der Positionen und/oder Ausrichtungen der vorgesehenen Raumsensoren.

Bevorzugt handelt es sich bei dem besagten wenigstens einen Raumsensor um einen oder mehrere LiDAR-Sensoren.

LiDAR-Sensoren ermöglichen eine besonders genaue und zuverlässige Abbildung des Sensorbereichs.

Bevorzugt handelt es sich bei dem Geschwindigkeitssensor um einen Encoder, welcher mit einer beweglichen Komponente der Fördereinrichtung gekoppelt ist.

Entsprechende sind Encoder besonders kompakt und regelmäßig ohnehin in entsprechenden Fördereinrichtungen, beispielsweise in deren Antrieb, vorgesehen.

Bevorzugt werden die unterschiedlichen Positionen und Ausrichtungen von drei an einer gemeinsamen Ecke des Testobjekts aufeinandertreffenden Seiten des Testobjekts ermittelt.

Dies ermöglicht eine relativ einfache und dennoch umfassende Ermittlung der jeweiligen Positionen und Ausrichtungen des Testobjekts.

Bevorzugt umfasst die Ermittlung der Positionen und Ausrichtungen dieser drei Seiten die Identifizierung der Flächennormalen dieser drei Seiten sowie die Identifizierung der relativen Position der gemeinsamen Ecke.

Diese Merkmale reichen bei einer entsprechenden Auswahl der drei Seiten des Testobjekts zur umfassenden Bestimmung der Positionen und Ausrichtungen des Testobjekts vollkommen aus und sind leicht zu verarbeiten

Bevorzugt liegt die unter Bezug genommene gemeinsame Ecke oberhalb einer durch die Förderfläche aufgespannten Förderebene.

Dies ermöglicht es neben den drei besagten Seiten auch relativ einfach auf die Position und Ausrichtung einer vierten Seite des Testobjekts in Gestalt derjenigen Seite, mit welcher das Testobjekt auf einer Förderfläche der Fördereinrichtung aufliegt, zu bestimmen und bei dem Verfahren zur Kalibrierung zu berücksichtigen. Beispielsweise können die weiteren Seiten zur Verifizierung und/oder Korrektur der erkannten Positionierung des Objekts herangezogen werden.

Bevorzugt umfasst das Verfahren die Anforderung und/oder Eingabe der Seitenlängen des quaderförmigen Testobjekts.

Diese Seitenlängen werden bevorzugt als weiterer Referenzwerte in das jeweilige Modell eingespeist und ermöglichen damit insbesondere die Erkennung von Fehlern in den Messdaten. Sollten nämlich die aus den Messdaten ermittelten Seitenlängen des jeweiligen Testobjekts nicht innerhalb entsprechender Toleranzbereiche dieser Referenzwerte liegen, ist bei der Ermittlung der Messdaten oder bei deren Auswertung offenkundig etwas schiefgelaufen. Die eingegebenen Seitenlängen dienen dabei lediglich als Orientierungswerte, während genaue Werte für die Seitenlängen aus den Messdaten der unterschiedlichen Messdurchläufe ermittelbar sind. Ungenauigkeiten bei einer manuellen Messung der Seitenlängen haben damit keinen unmittelbaren Einfluss auf das Ergebnis der Kalibrierung selbst.

Bevorzugt umfasst das Verfahren ferner die Beförderung des quaderförmigen Testobjekts in einer dritten relativen Position und Ausrichtung durch den Erfassungsbereich des wenigstens einen Raumsensors und Aufnahme sowie Auswertung eines dritten Satzes entsprechender Messdaten. Dabei sind bevorzugt die die vertikale Ausrichtung aller drei relativen Positionen und Ausrichtungen voneinander verschieden und umfasst das Verfahren die Ermittlung und/oder Korrektur der Seitenlängen des quaderförmigen Testobjekts anhand der drei Sätze von Messdaten zu den drei unterschiedlichen vertikalen Ausrichtungen des quaderförmigen Testobjekts.

Anschaulich gesprochen wird unter der Formulierung "vertikale Ausrichtung" die konkrete Wahl derjenigen Wand, auf welcher das Testobjekt abgestellt wird, verstanden, bzw. welche der drei Seitenlängen des Testobjekts als Höhe des Testobjekts fungiert. Bei einem angenommen quaderförmigen Testobjekt mit drei unterschiedlichen Seitenlängen gibt es sechs Seiten, von denen jeweils zwei paarweise einander gegenüberliegen und identisch zueinander ausgebildet sind. Das Testobjekt ist dann in einer ersten vertikalen Ausrichtung, wenn das Testobjekt auf einer der zwei Seiten eines ersten Paares von paarweise einander gegenüberliegenden identischen Seiten steht. Das Testobjekt ist in einer zweiten vertikalen Ausrichtung, wenn das Testobjekt auf einer der zwei Seiten eines zweiten Paares von paarweise einander gegenüberliegenden identischen Seiten steht. Das Testobjekt ist schließlich in einer dritten vertikalen Ausrichtung, wenn das Testobjekt auf einer der zwei Seiten des dritten Paares von paarweise einander gegenüberliegenden identischen Seiten steht. Damit ergibt sich für jede der drei Messdurchläufe eine unterschiedliche Höhe des Testobjekts, wobei jede dieser drei Höhen einer Seitenlänge des Testobjekts entspricht. Die Gesamtheit der Messdaten dieser drei Messdurchläufe ermöglicht eine besonders einfache und dennoch zuverlässige und genaue Bestimmung der unterschiedlichen Seitenlängen des Testobjekts, was die Kalibrierung der Raumsensoren und/oder des Geschwindigkeitssensors erheblich erleichtert.

Bevorzugt umfasst das Verfahren ferner die Beförderung des quaderförmigen Testobjekts in einer vierten relativen Position und Ausrichtung durch den Erfassungsbereich des wenigstens einen Raumsensors und Aufnahme eines vierten Satzes entsprechender Messdaten durch den wenigstens einen Raumsensor und den wenigstens einen Geschwindigkeitssensor. Eine absolute Position des wenigstens einen Raumsensors wird relativ zu einem festgelegten Ursprung auf Basis der Gesamtheit der vier Sätze von Messdaten unter Berücksichtigung der Referenzdaten mithilfe eines bzw. des mathematischen Optimierungsalgorithmus ermittelt.

Insbesondere erfolgt die Ermittlung der Position der vorgesehenen Raumsensoren zusammen mit der Ermittlung der Ausrichtung der vorgesehenen Raumsensoren anhand eines einzelnen umfassenden Modells und im Zuge eines gemeinsamen Optimierungsprozesses bzw. mittels eines gemeinsamen mathematischen Optimierungsalgorithmus.

Im Folgenden wird im Detail beschrieben, wie das Optimierungsproblem verstanden und gelöst werden kann, d.h. es wird die eine mögliche Funktionsweise des Optimierungsalgorithmus beschrieben:

Konkret kann ein dynamischer Kalibrierungsassistent vorgesehen werden, um gleichzeitig unterschiedliche Parameter vorgesehener Raumsensoren und eines zugehörigen Geschwindigkeitssensors zu berechnen. Beispielsweise wird dem Benutzer ein Web-Interface angeboten, welche diesen in Gestalt eines Assistenten durch mehrere Schritte führt. Während der Installation wird das Testobjekt, insbesondere in Form einer Testbox, in vier unterschiedlichen Positionen und Ausrichtungen unter Zuhilfenahme einer Fördereinrichtung mit bevorzugt konstanter Geschwindigkeit durch den Überwachungsbereich des Sensorsystems gefahren. Der nachfolgend beschriebene Kalibrierungsassistent ermittelt automatisch alle benötigten Parameter aus den gemessenen Erstreckungsebenen der Seitenflächen der Testbox unter Verwendung eines mathematischen Optimierungsalgorithmus. Dafür müssen die Seitenflächen der Testbox möglichst senkrecht aufeinander stehen.

Der Kalibrierungsassistent kann wie folgt ausgebildet sein:

1. Ausgangssituation

Ein Volumen-Mess-System umfasst beispielsweise eine Mehrzahl von LiDAR-Sensoren, welcher über einer Fördereinrichtung positioniert sind. Ein Geschwindigkeitssensor, insbesondere in Gestalt eines Encoders mit einem Messrad, gibt ein Bewegungsfeedback und genaue Positionsinformationen der Fördereinrichtung.

Der dynamische Kalibrierungsassistent zielt darauf ab, die Position $t_s = (x, y, z)$ und die Ausrichtung (parametrisiert über drei Euler-Winkel $\alpha, \beta, \gamma$) jedes der Sensoren zu schätzen. Zusätzlich zu diesen sechs Sensorkoordinaten berechnet er ebenfalls einen Korrespondenzfaktor $\eta$, welcher das Signal des Encoders in genaue Positionsinformationen umwandelt.

Ein Punkt in den Sensorkoordinaten ist in Gestalt von Polarkoordinaten $d, \theta$ gegeben. Nach der Transformation dieser in kartesische Koordinaten ist jeder Punkt definiert als:

$$p' := (e', d\cos(\theta), -d\sin(\theta))$$

Hierbei bezieht sich das p' auf den ursprünglichen Rahmen der kartesischen Sensorkoordinaten und e' bezeichnet den Encoder-Inkrementalwert. Jeder Punkt in den Sensorkoordination ist in Weltkoordinaten überführbar über:

$$p = Ap' + t_S$$

wobei *A* der folgenden affinen Transformation entspricht:

$$A = \left[[\eta, 0, 0]^T, R_x, R_y\right]$$

und *R* der folgenden Rotationsmatrix entspricht:

$$R(\alpha, \beta, \gamma) = [R_x, R_y, R_z]$$

parametrisiert durch die drei Euler-Winkel.

2. Initiierung

Um den Kalibrierungsprozess einzuleiten werden Messdaten zu einer leeren Fördereinrichtung (also ohne Testobjekt bzw. Testbox) gesammelt. Diese Hintergrundinformationen werden nachfolgend benutzt, um relevante Messpunkte des quaderförmigen Testobjekts vom Hintergrund zu trennen. Der Benutzer wird aufgefordert, die Länge, Breite und Höhe (*l, w, h*) der Testbox einzugeben. Diese Informationen werden später verwendet um die räumlichen Positionen der kalibrierten Raumsensoren zu schätzen.

3. Aufnahme der Testbox in vier unterschiedlichen Positionen und Ausrichtungen

Ein quaderförmiges Testobjekt wird derart auf der Fördereinrichtung positioniert, dass, wenn das Testobjekt die Raumsensoren passiert, jeder der Raumsensoren drei Seiten des Testobjekts "sieht", Es wird angenommen, dass das Testobjekt um die z-Achse (vorliegend die Vertikale) um einen unbekannten Winkel $\rho$ gedreht wird. Die Hintergrundinformationen werden dazu genutzt, eine Punktewolke, welche das Testobjekt abbildet, vom Hintergrund zu trennen.

Mittels eines Clustering-Algorithmus in der Normalenmenge der segmentierten Punktwolke und eines Standard-Algorithmus zur Ebenenanpassung werden die drei Ebenennormalen $n_1', n_2', n_3'$ und der Schnittpunkt $q_s'$, wo sich alle drei Seiten treffen, berechnet.

Der Benutzer erhält Anweisungen dazu, die Testbox in vier unterschiedlichen vordefinierten Positionen und Ausrichtungen auf die Fördereinrichtung zu stellen und das Sensorsystem passieren zu lassen. Sobald die Testbox in der jeweils angezeigten Position und Ausrichtung aufgenommen wurde, erkennt der Algorithmus dies und zeigt automatisch Anweisungen für die nächste Position und Ausrichtung an. Die Orientierung der Raumsensoren wird, neben anderen Informationen, anhand zweier unterschiedlicher Positionen, insbesondere einmal links auf der Fördereinrichtung und einmal rechts auf der Fördereinrichtung , ermittelt. Die Orientierung der Sensoren zeigt an, in welcher Richtung das innere Spiegelrad der jeweiligen LiDAR-Sensoren rotiert. Durch die Aufnahme der Testbox in allen seinen drei unterschiedlichen Höhen (also vertikalen Ausrichtungen) ist es später bei der Optimierung möglich, die exakten Dimensionen der Testbox zu ermitteln und Fehler bzw. Ungenauigkeiten durch eine manuelle Vermessung der Testbox zu eliminieren.

Der Assistent überprüft die aufgenommenen Daten und schätzt, ob das Testobjekt in der jeweils korrekten Position und Ausrichtung positioniert wurde. Falls der Assistent ermittelt, dass das Testobjekt in der falschen Position oder Ausrichtung positioniert wurde, wird der Benutzer aufgefordert, dies zu verifizieren und gegebenenfalls zu dem entsprechenden Schritt zurückzukehren.

4. Darstellung einer Rotation durch Quaternionen

Die affine Transformation

$$A = [[\eta, 0,0]^T, R_x, R_y]$$

ist abhängig von der Rotationsmatrix *R*, die durch die Eulerwinkel parametrisiert ist:

$$R = R(\alpha, \gamma, \gamma)$$

Eine Darstellung durch Eulerwinkel führt zu numerisch instabilen Schätzungen. Um stabilere Schätzungen zu erhalten, wird die Rotation durch ihre entsprechenden vier Tupel-Quaternionen q ausgedrückt:

$$R = R(q), \quad q = (q_0, q_1, q_2, q_3)$$

Ähnlich kann eine Rotation um die z-Achse (also um die Vertikale) ausgedrückt werden durch:

$$R_z = R(u), \quad u = (u_0, u_1)$$

Dabei ist zu beachten, dass die jeweiligen Rotationen jeweils noch immer lediglich drei bzw. einen Freiheitsgrad haben, nachdem angenommen wird, dass die Quaternionen normalisiert sind.

Allgemein gesprochen verwendet der Optimierungsalgorithmus gemäß einer Ausführungsform eine affine Transformation und/oder stellt eine Rotation durch Quaternionen stellt.

5. Sensorebenengleichung

Wie bereits oben angedeutet, sind Punkte der Sensorkoordinaten über folgende Gleichung in Weltkoordinaten zu transformieren:

$$p = Ap' + t_s$$

Ausgehend hiervon sind Ebenen zu transformieren. Es sei angenommen, dass $n_i'$ eine Ebenennormale in Sensorkoordinaten und $n_i$ die entsprechende Ebenennormale in Weltkoordinaten bezeichnet. Beide Vektoren sind als normalisiert angenommen, das heißt $\| n_i' \| = \| n_i \| = 1$. Unter der affinen Transformation gilt, dass $A^T n_i$ parallel zu $n_i'$ ist bzw.:

$$A^T n_i = n_i' \| A^T n_i \|$$

Die Testbox wird in den vier Durchgängen aus Abschnitt 3 jeweils in einem bestimmten Winkel $\varphi$ um die z-Achse (also um die Vertikale) gedreht. Es sei angenommen, dass es einen Winkel $\varphi$ gibt, unter welchem die Testbox derart gedreht ist, dass die beiden Seitenwände des Testobjekts, die durch einen Raumsensor "gesehen" werden, ausgerichtet sind auf $e_x = e_0 = (1,0,0)$ bzw. $e_y = e_1 = (0,1,0)$. Die Deckfläche zeigt dabei stets in $e_z = e_2 = (0,0,1)$.

Die Rotation sei gegeben durch die Rotationsmatrix $R_z(\varphi)$. Für die Ebenennormalen der Testbox gilt dann:

$$A^T n_i = A^T R_z(\varphi) e_i \propto n_i', \quad i = 0,1,2,$$

und damit

$$A^T R_z(\varphi) e_i \times n_i' = 0, \quad i = 0,1,2.$$

6. Beschränktes Minimierungsproblem

Bevorzugt werden die Sensorebenennormalen $n_i^k$ für jeden Testlauf $k = 0,1,2,3$ gemessen. Die Rotationsmatrix, zusammen mit einer angenommenen Objektrotation $\varphi^k$ um die z-Achse, ist gegeben durch

$$R = R(q) = R(q_0, q_1, q_2, q_3), \quad R_z(\varphi) = R_z(u^k) = R_z\big(u_0^k, u_1^k\big).$$

Die Rotationsparameter q und $u^k$, zusammen mit dem Encoder-Auflösungsparameter $\eta$, werden durch das Lösen des folgenden nichtlinearen beschränkten Minimierungsproblems ermittelt:

$$\min_{\eta, q, u^k} \sum_k F^k(\eta, q, u^k)$$

mit

$$F^k(\eta, q, u^k) = \sum_i \| A^T(q) R_\varphi(u^k) e_i \times n_i' \|^2.$$

Nachdem die Quaternionen normalisiert sind, gelten die folgenden Nebenbedingungen:

$$f_1(q) = \sum_{i=1}^{4} q_i^2 - 1 = 0, \quad f_2(u) = \sum_{i=1}^{2} \big(u_i^k\big)^2 - 1 = 0.$$

Dies kann durch numerische Standardoptimierungstechniken gelöst werden. Ein Weg zur Lösung ist der Levenberg-Marquardt-Algorithmus, wobei die Beschränkung über einen Lagrange-Multiplikator eingeführt wird.

Mit Verweis auf die Ausführungen unter Punkt 1 sei darauf hingewiesen, dass dieses Problem auch vollkommen unbeschränkt gelöst werden kann.

Konkret wurde herausgefunden, dass am praktischsten bei stabilen Ergebnissen ist, das Minimierungsproblem iterativ zu lösen, wobei die Beschränkungen über Regulationsausdrücke eingeführt werden. In jedem Schritt wird ein modifiziertes beschränktes Minimalisierungsproblem gelöst mit

$$F_\varepsilon^k(\eta, q, u^k) = F^k(\eta, q, u^k) + \frac{1}{\varepsilon}|f_1(u)|^2 + \frac{1}{\varepsilon}|f_2(u)|^2$$

bei kleiner werdendem Regulationsparameter $\varepsilon$. Jeder Schritt stellt ein unbeschränktes Minimierungsproblem dar und kann über einen Gauß-Newton-Iterationsalgorithmus gelöst werden. Ein anfänglicher Startwert für den Optimierungsalgorithmus kann unter Verwendung der folgenden Annahme berechnet werden:

$$A^T n_i \approx \kappa n_i',$$

wobei $\kappa$ einer anfänglichen Schätzung von $\|A\|$ entspricht.

Allgemein gesprochen löst der Optimierungsalgorithmus gemäß einer Ausführungsform ein Optimierungsproblem, wobei das Optimierungsproblem ein, insbesondere beschränktes, Minimierungsproblem umfasst, welches iterativ gelöst wird.

7. Schätzung der relativen räumlichen Positionen zwischen zwei Sensoren

Eine angenäherte Lösung des Optimierungsproblems gibt eine Annäherung an die affine Transformationsmatrix $A$ inklusive der Orientierung jedes der Sensoren, angezeigt durch ihre Eulerwinkel $\alpha, \beta, \gamma$ zusammen mit dem Rotations-winkel $\varphi$ des Testobjekts bei jedem Durchlauf. Mit der Kenntnis der Orientierung der Sensoren ist es einfach zu ermitteln, welche Ebenen durch die Sensoren bei den unterschiedlichen Durchläufen "gesehen" wurden. Mit diesen Informationen kann die jeweilige Objektecke ermittelt werden, welcher dem Schnittpunkt $q_s'$ der drei betrachteten Ebenen entspricht. Die entsprechende Objektecke kann sich zwischen den Sensoren voneinander unterscheiden. Im Allgemeinen liegt bei einem Sensorsystem mit zwei Sensoreinheiten die Objektecke, welche durch die zweite Sensoreinheit "gesehen" wird, derjenigen Objektecke, welche durch die erste Sensoreinheit "gesehen" wird, gegenüber. Unter der Annahme, dass zwei LiDAR-Sensoren vorgesehen sind, sei r der räumliche Beziehungsvektor zwischen den Weltkoordinaten dieser beiden Schnittpunkte, das heißt:

$$q_{S,1} = q_{S,2} + r$$

Unter Verwendung der Dimensionen der Testbox und der geschätzten Objektrotation kann der Wert von r leicht errechnet werden. Zusammen mit der obigen Gleichung der affinen Transformation ist die relative räumliche Positionierung der beiden betrachteten Sensoren ermittelbar.

9. Optionale nachgelagerte Optimierung der Dimensionen des Testobjekts

Über einen nachgelagerten Optimierungsschritt ist es möglich, Unsicherheiten, welche möglicherweise von einer manuellen Vermessung der Testbox herrühren, zu vermeiden. Unter Verwendung des ersten Optimierungsschritts ist es möglich, die parallelen Seitenflächen und die Deckfläche (parallel zur Förderfläche) des Testobjekts in den vier Durchläufen zu finden. Mit einer entsprechend ergänzten Optimierungsfunktion $F(\eta, q_i, u_i, t_S, l, w, h)$ ist es möglich, die Werte der Dimensionierung der Testbox zusammen mit den Werten der Orientierung der Sensoren zu optimieren.

10. Optionale statische Messung

Um die relative Position des Sensorsystems relativ zu anderen Sensoren (wie beispielsweise Codelesern, Kameras, oder Triggersensoren) zu bestimmen, kann ein statischer Messschritt verwendet werden. Dies ermöglicht die Ermittlung der absoluten Position des Sensorsystems in Bezug auf einen fiktiven Null-Punkt.

11. Ergebnisse

In einem finalen Schritt zeigt der Kalibrierungsassistent die errechneten Parameter einem Benutzer an. Dabei kann dem Benutzer die Option angeboten werden, die errechneten Parameter direkt für alle Sensoren einzustellen und zu speichern. Die obigen Ausführungen zeigen beispielhafte Überlegungen zur Umsetzung der vorliegenden Erfindung auf. Es sei darauf hingewiesen, dass diese, soweit sie unabhängig voneinander sind, jeweils für sich zur Weiterbildung des Grundgedankens der vorliegenden Erfindung herangezogen werden können. Mit anderen Worten, die obigen Ausführungen ist nicht als zusammenhängender Komplex einer Vielzahl untrennbar miteinander verbundener Merkmale zu verstehen, sondern als Ansammlung einzelner Überlegungen bzw. Merkmale zur besonders vorteilhaften Umsetzung der vorliegenden Erfindung.

Hierbei sei darauf hingewiesen, dass sich die vier relativen Positionen und Ausrichtungen des Testobjekts voneinander zu unterscheiden haben. Gewisse Gemeinsamkeiten zwischen diesen sind jedoch nicht ausgeschlossen und ermöglichen sogar eine einfachere Auswertung. Beispielsweise kann für zwei Messdurchläufe das Testobjekt an einer ersten Position auf der Förderfläche vorgesehen werden, um in einem ersten Bereich den Erfassungsbereich des wenigstens einen Raumsensors zu passieren und für die anderen beiden Messdurchläufe das Testobjekt an einer zweiten Position auf der Förderfläche vorgesehen werden, um in einem zweiten Bereich den Erfassungsbereich des wenigstens einen Raumsensors zu passieren. Für die jeweils paarweisen Messdurchläufe mit derselben Position für das Testobjekt ist es dann aber notwendig, dass sich die Ausrichtung des Testobjekts unterscheidet. Insbesondere unterscheidet sich dabei zumindest eines aus der vertikalen Ausrichtung und der horizontalen Ausrichtung des Testobjekts zwischen zwei entsprechenden Messdurchläufen. Als horizontale Ausrichtung wird hierbei die rotative Ausrichtung des Testobjekts um eine Normale der Förderfläche verstanden.

Die besagten vier Messdurchläufe ermöglichen eine umfassende und genaue Kalibrierung der vorgesehenen Raumsensoren und auch eine besonders genaue Bestimmung des Korrespondenzfaktors das Geschwindigkeitssensors. Die Durchführung und Berücksichtigung von mehr als vier Messdurchläufen ist auch möglich, um eine zuverlässigere Kalibrierung zu erhalten, ist jedoch auch mit einem entsprechenden Mehraufwand verbunden. Auch ist es denkbar einen oder mehrere Verifizierungsdurchläufe vorzunehmen, mittels welcher überprüft wird, ob das derart kalibrierte System schließlich auch zuverlässig arbeitet und plausible Werte ausgibt.

Bevorzugt unterscheiden sich die Positionen und Ausrichtungen der unterschiedlichen Messdurchgänge des Testobjekts durch den Erfassungsbereich jeweils um wenigstens, insbesondere genau, zwei aus der horizontalen Ausrichtung, der vertikalen Ausrichtung und der horizontalen Position des Testobjekts voneinander.

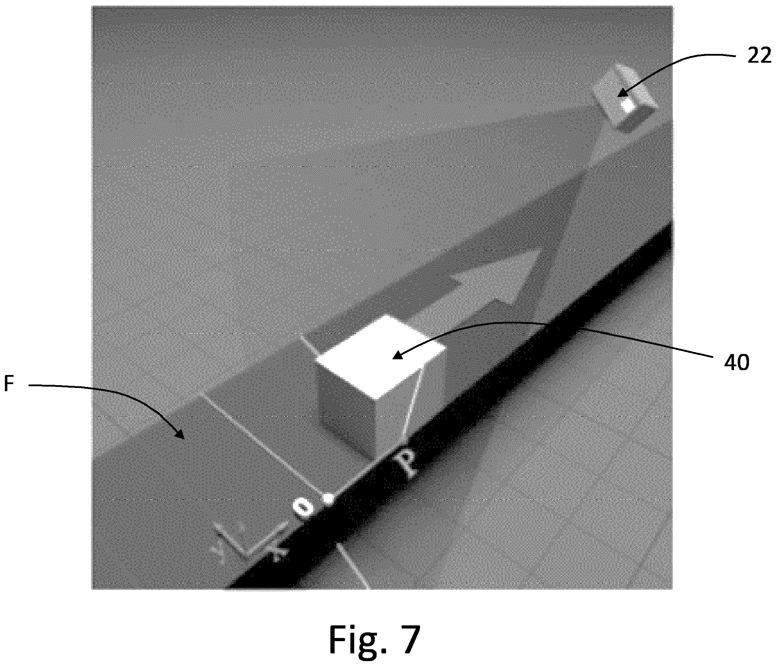

Die horizontale Ausrichtung ist hierbei durch die Ausrichtung des Testobjekts relativ zur Förderrichtung der Fördereinrichtung definiert. Die vertikale Ausrichtung ist durch die Wahl der Seite des Testobjekts, auf welcher das Testobjekt gestellt wird definiert. Die horizontale Position des Testobjekts wird durch die Positionierung des Testobjekts quer zur Förderrichtung der Fördereinrichtung bestimmt. Beispielsweise sei auf ein kartesisches Koordinatensystem Bezug genommen, dessen Ursprung auf der Förderfläche liegt, dessen x-Achse auf der Förderfläche liegt und die Förderrichtung anzeigt, dessen y-Achse auf der Förderfläche liegt und quer zur x-Achse verläuft und dessen z-Achse senkrecht zur Förderfläche verläuft, wie dies in Fig. 7 dargestellt ist. Als horizontale Ausrichtung wird dann anschaulich die rotative Ausrichtung des Testobjekts um die z-Achse verstanden, während die horizontale Position die Position des Testobjekts entlang der y-Achse anzeigt. Die vertikale Ausrichtung definiert die Höhe des Testobjekts entlang der z-Achse.

Durch diese Variation ist es möglich das Testobjekt in unterschiedlichen Positionen und Ausrichtungen beim Passieren des Erfassungsbereichs des wenigstens einen Raumsensors zu beobachten und aus den entsprechenden Messdaten zuverlässig und genau die konkrete Position und Ausrichtung des wenigstens einen Raumsensors bzw. der Mehrzahl von Raumsensoren zu ermitteln.

Bevorzugt wird die vertikale Positionierung des quaderförmigen Testobjekts durch eine Förderfläche der Fördereinrichtung, auf welcher eine Seite des quaderförmigen Testobjekts aufliegt, definiert und ist für alle Messdurchläufe identisch.

Konkret erfolgt also eine Variation der vertikalen Ausrichtung des Testobjekts durch eine Variation derjenigen Seitenlänge, welche als Höhe fungiert. Das Testobjekt wird aber für jeden Messdurchlauf auf dieselbe Förderfläche gestellt und weist damit im vorliegenden Verständnis für jeden Messdurchlauf dieselbe vertikale Positionierung (also Positionierung entlang der z-Achse in Fig. 7) auf. Damit ist der Freiheitsgrad der vertikalen Positionierung eliminiert, was die Auswertung der Messdaten deutlich erleichtert und bereits eine geringe Anzahl von Messdurchläufen zur umfassenden Kalibrierung des Sensorsystems ausreichen lässt.

Bevorzugt umfasst das Verfahren ferner die Positionierung des quaderförmigen Testobjekts im Erfassungsbereich des wenigstens einen Raumsensors und die Aufnahme zugehöriger statischer Messdaten, die Ermittlung der relativen Position des wenigstens einen Raumsensors relativ zu wenigstens einem weiteren Sensor, insbesondere in Gestalt eines Lesegeräts, einer Kamera oder eines andersartigen Auslösesensors, und die Ermittlung einer Absolutposition des wenigstens einen weiteren Sensors aus der ermittelten Relativposition des wenigstens einen weiteren Sensors relativ zu dem wenigstens einen Raumsensor.

Durch diese "statische" Kalibrierung weiterer Sensoren ist es auf besonders einfache Art und Weise möglich, weitere Sensoren in das Sensorsystem einzubinden und zu kalibrieren, ohne das oben beschriebene Verfahren in seiner Gesamtheit wiederholen zu müssen. Beispiele für weitere Sensoren sind Lesegeräte für Kodierungen, Kameras oder Triggersensoren. Auch ist hierüber die Ermittlung der Absolutposition des gesamten Systems bezüglich eines gewählten Nullpunktes, bevorzugt am Förderband und beispielsweise durch eine Lichtschranke gegeben, möglich.

Bevorzugt umfasst das Verfahren ferner die Durchführung eines Plausibilitätstest zu den aufgenommenen Messdaten und/oder den ermittelten Merkmalen des Testobjekts und/oder des wenigstens einen Raumsensors und/oder des Geschwindigkeitssensors, sowie die Ausgabe einer Fehlermeldung an einen Benutzer, sofern Unstimmigkeiten erkannt werden.

Ein solcher Plausibilitätstest kann beispielsweise in Gestalt eines Abgleichs von errechneten Seitenlängen des Testobjekts mit von einem Benutzer eingegebenen Referenzwerten hierfür erfolgen. Auch können ermittelte Positionen und Ausrichtungen der vorgesehenen Raumsensoren mit räumlichen Gegebenheiten abgeglichen werden. Falls sich beispielsweise für die errechnete Ausrichtung eines Raumsensors ergeben sollte, dass dieser überhaupt nicht auf die Förderfläche ausgerichtet ist, kann hieraus auf einen Fehler geschlossen werden. Auch kann auf einen Fehler geschlossen werden, wenn die errechnete Position und/oder Ausrichtung von einer zur Einrichtung vorgegebenen Zielposition und/oder -ausrichtung zu sehr abweicht. Auch können zu große Diskrepanzen der optimierten Position und/oder Ausrichtung bzw. Korrespondenzfaktoren zu entsprechenden Werten aus einzelnen Messdurchläufen auf einen Fehler bei einem dieser Messdurchläufe hinweisen. Die Ausgabe einer entsprechenden Fehlermeldung ermöglicht es einem Benutzer, manuell entsprechende Korrekturen vorzunehmen und/oder beispielsweise einen der durchgeführten Messdurchläufe (oder das gesamte Verfahren zur Kalibrierung) zu wiederholen. Auch ist es möglich, einem Benutzer, insbesondere in Abhängigkeit von Messdaten vorangegangener Messdurchläufe, bestimmte Anweisungen bzw. Vorschläge zur Positionierung und/oder Ausrichtung des Testobjekts für die unterschiedlichen Messdurchläufe zu geben. Abweichungen von entsprechenden Anweisungen bzw. Vorschlägen können ermittelt werden und nachfolgende Anweisungen bzw. Vorschläge beeinflussen und/oder in einer Meldung an den Benutzer resultieren.

Ferner betrifft die vorliegende Erfindung auch ein computerlesbares Speichermedium, auf welchem Anweisungen gespeichert sind, welche ein geeignetes Sensorsystem, insbesondere ein entsprechendes Volumen-Mess-Systems, für Fördereinrichtungen dazu veranlassen, das zuvor beschriebene Verfahren auszuführen und/oder einen Benutzer durch ein entsprechendes Verfahren führen.

Auch betrifft die vorliegende Erfindung ein Sensorsystem, insbesondere ein Volumen-Mess-System, welches dazu ausgebildet ist, das zuvor beschriebene Verfahren auszuführen.

Schließlich betrifft die vorliegende Erfindung auch ein Fördersystem, mit einer Fördereinrichtung zur Beförderung von Objekten und dem zuvor beschriebene Sensorsystem, insbesondere in Gestalt eines Volumen-Mess-Systems, welches auf die Fördereinrichtung ausgerichtet ist und dazu ausgebildet ist, Objekte, welche durch die Fördereinrichtung befördert werden, zu analysieren.

Die Ausführungen zum erfindungsgemäßen Verfahren gelten für das erfindungsgemäße Speichermedium, das erfindungsgemäße Sensorsystem und das erfindungsgemäße Fördersystem entsprechend, dies gilt insbesondere hinsichtlich Vorteilen und Ausführungsformen. Ebenso versteht es sich, dass sämtliche hierin genannten Merkmale miteinander kombinierbar sind, sofern nicht etwas Gegenteiliges angegeben ist.

Nachfolgend wird die Erfindung rein beispielhaft unter Bezugnahme auf die Zeichnungen beschrieben. Es zeigt:

Fig. 1    eine schematische perspektivische Ansicht eines Abschnitts eines beispielhaften Fördersystems mit einem Sensorsystem gemäß der vorliegenden Erfindung;

Fig. 2    schematisch einen ersten Verfahrensschritt eines beispielhaften erfindungsgemäßen Verfahrens;

Fig. 3    schematisch einen zweiten Verfahrensschritt eines beispielhaften erfindungsgemäßen Verfahrens;

Fig. 4    schematisch einen dritten Verfahrensschritt eines beispielhaften erfindungsgemäßen Verfahrens;

Fig. 5    schematisch einen vierten Verfahrensschritt eines beispielhaften erfindungsgemäßen Verfahrens;

Fig. 6    schematisch einen fünften Verfahrensschritt eines beispielhaften erfindungsgemäßen Verfahrens; und

Fig. 7    schematisch einen optionalen sechsten Verfahrensschritt eines beispielhaften erfindungsgemäßen Verfahrens;

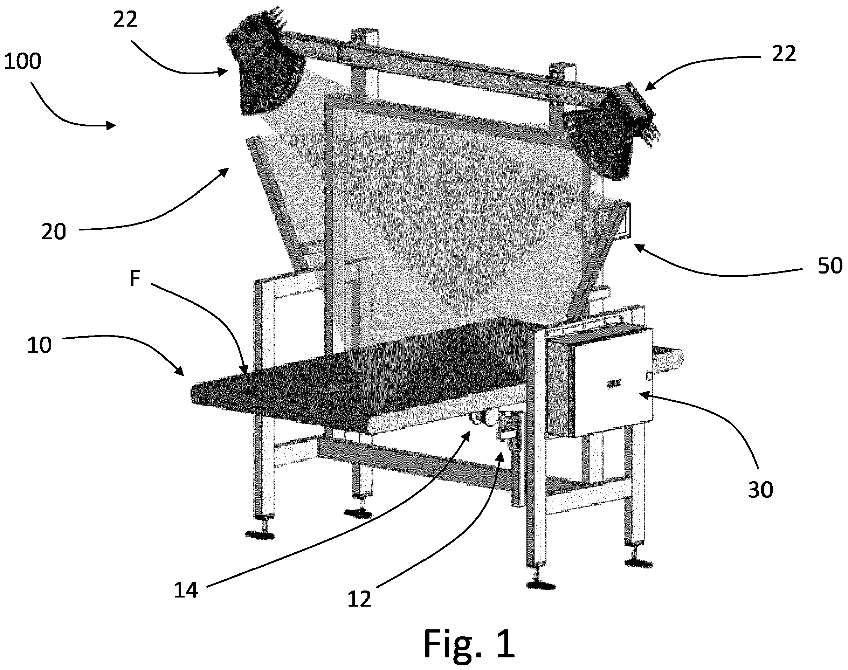

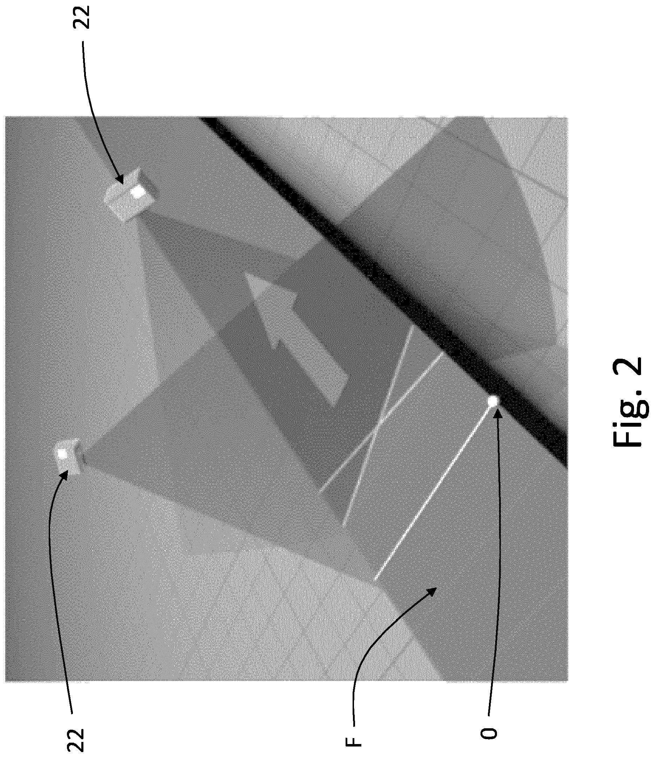

Fig. 1 zeigt schematisch den Aufbau eines Fördersystems 100 mit einer Fördereinrichtung 10 und einem Sensorsystem 20. Die vorliegend gezeigte Fördereinrichtung 10 ist in Gestalt eines Förderbandes ausgebildet, dessen Oberfläche eine Förderfläche F definiert, auf welcher die Fördereinrichtung 10 unterschiedliche Objekte 40 entlang einer Förderrichtung (vorliegend von links vorne nach rechts hinten im Bild; siehe auch die Pfeile in den Figuren 2 bis 7) befördern kann. Das Sensorsystem 20 umfasst in der gezeigten Ausgestaltung zwei Raumsensoren 22 in Gestalt von LiDAR-Sensoren, welche auf die Förderfläche F ausgerichtet sind. Ein Geschwindigkeitssensor 14 ist als Encoder ausgebildet und in den Antrieb 12 der Fördereinrichtung 10 integriert.

Sowohl die beiden Raumsensoren 22 als auch der Geschwindigkeitssensor 14 sind mit einer gemeinsamen Recheneinheit 30 gekoppelt. Die besagte Recheneinheit 30 ist dazu ausgebildet Messsignale von den beiden Raumsensoren 22 und den Geschwindigkeitssensor 14 zu erhalten und auszuwerten. Konkret ist die Recheneinheit 30 beispielsweise dazu vorgesehen, anhand der Messsignale der beiden Raumsensoren 22 und das Geschwindigkeitssensors 14 das Volumen eines Objekts 40 zu bestimmen, welches durch die Fördereinrichtung 10 entlang der Förderrichtung durch den Erfassungsbereich der Raumsensoren 22 bewegt wurde. Hierfür ist es jedoch notwendig, dass die Recheneinheit 30 Informationen zur Position und Ausrichtung der vorgesehenen Raumsensoren 22 sowie Informationen zu einem Korrespondenzfaktor des Geschwindigkeitssensors 14 hat. Diese Informationen werden erfindungsgemäß nicht mehr von Hand ermittelt und manuell in der Recheneinheit 30 (bzw. deren Speicher) abgelegt, sondern über ein spezifisches Verfahren zur Kalibrierung ermittelt.

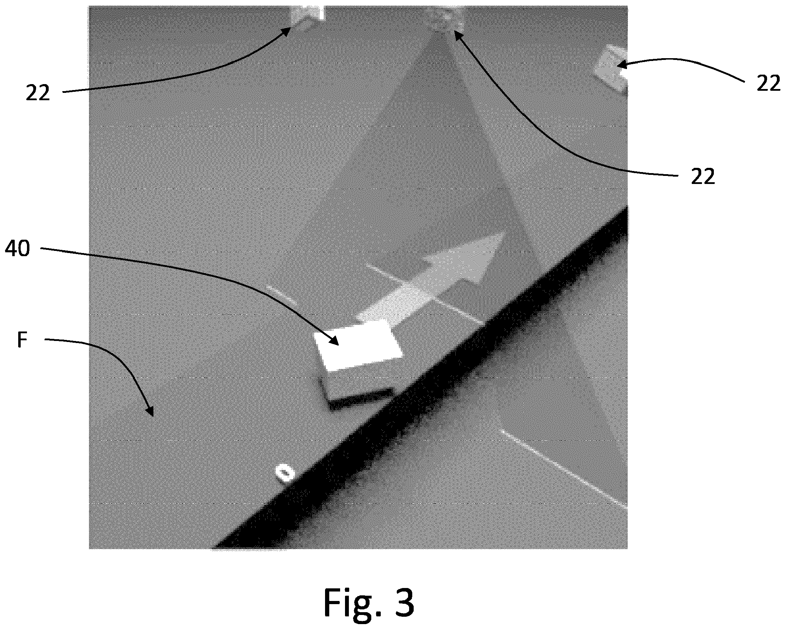

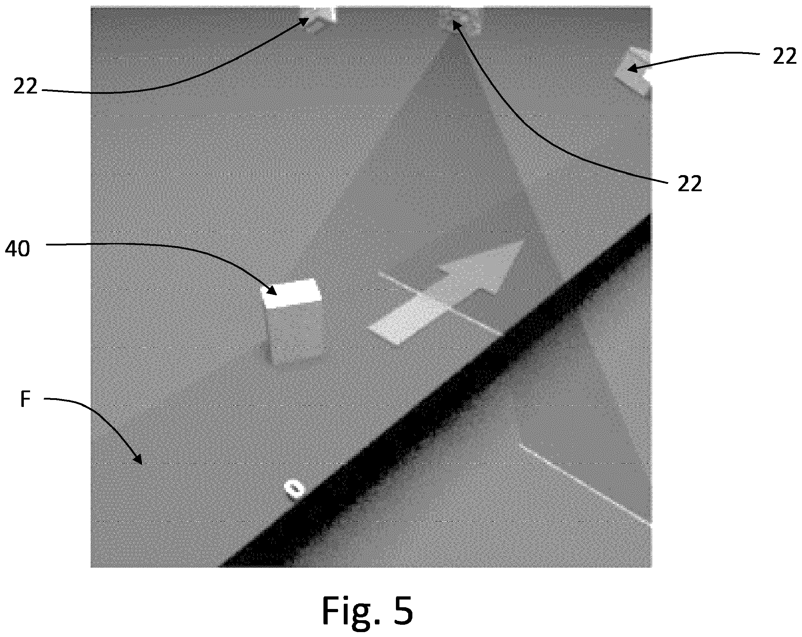

Im Folgenden wird anhand der Figuren 2 bis 6 ein Beispiel für ein entsprechendes Verfahren beschrieben. Hierbei sei jedoch darauf hingewiesen, dass die Reihenfolge der einzelnen Verfahrensschritte, in welchen die Referenzdaten und/oder die Messdaten erzeugt werden, beliebig variiert werden kann. Beispielsweise ist es möglich mit der Messung aus Fig. 5 zu beginnen und dieser die Referenzmessung der Fig. 2 folgen zu lassen, während die weiteren Messungen der Figuren 3, 4 und 6 sich an die Referenzmessung anschließen. Es ist lediglich entscheidend, dass zur finalen Kalibrierung des Sensorsystems 20 alle vorgesehenen Referenzdaten und/oder Messdaten vorliegen.

Ob das Sensorsystem 20 dabei einen Raumsensor (vgl. Fig. 7), zwei Raumsensoren 22 (vgl. Figuren 1 und 2) oder drei Raumsensoren 22 (vgl. Figuren 3 bis 6) umfasst, ist im Grunde nicht entscheidend. Eine Mehrzahl von Raumsensoren 22 erlaubt jedoch eine umfassendere Abbildung von Objekten 40 auf der Fördereinrichtung 10.

Ziel des im folgenden beschriebenen Verfahrens ist es, die räumliche Position und Ausrichtung der vorgesehenen Raumsensoren 22 sowie den Korrespondenzfaktor des Geschwindigkeitssensors 12 zu ermitteln, um das Sensorsystem 20 zu kalibrieren. Als Ursprung dient im vorliegenden Beispiel der feste Punkt 0 an einem rechten Rand der Förderfläche F. Die x-Achse erstreckt sich parallel zur Förderrichtung entlang der Förderfläche F. Die y-Achse erstreckt sich quer zur Förderrichtung entlang der Förderfläche F. Die z-Achse erstreckt sich nach oben senkrecht zur Förderfläche F (vgl. das Koordinatensystem in Fig. 7). Der zu ermittelnde Korrespondenzfaktor zeigt den Zusammenhang zwischen dem Messsignal des Encoders 14 und einer Bewegung eines auf der Förderfläche F abgestellten Objekts 40 bzw. der Förderfläche F entlang der Förderrichtung an. Ausgehend von einer bekannten Ausgansposition des Objekts 40 ist mithilfe dieses Korrespondenzfaktors aus einem Messsignal des Encoders 40 auf den Umfang und ggf. die Richtung (also vorwärts oder rückwärts) einer Bewegung des Objekts 40 entlang der Förderrichtung, also entlang der x-Achse zu ermitteln. Die Positionierung des Objekts 40 entlang der y-Achse auf der Förderfläche F definiert den wesentlichen Aspekt der horizontalen Position des Objekts 40. Eine Änderung dieser vertikalen Position auf der Förderfläche F darf sich im Allgemeinen innerhalb eines einzelnen Messdurchlaufs nicht ändern. Selbiges gilt für die vertikale Position des Objekts 40, welche im vorliegenden Beispiel durch die Höhe der Förderfläche F festgelegt wird und für alle Messdurchläufe gleich ist.

Das beispielhaft vorgestellten Verfahren beginnt entsprechend Fig. 2 mit der Aufnahme von Referenzdaten durch die Raumsensoren 22 bei leerer Fördereinrichtung, also ohne Testobjekt 40 innerhalb des Erfassungsbereichs der Raumsensoren 22. Konkret wir damit ein Abbild des Erfassungsbereichs der Raumsensoren 22 als Referenzbild zur späteren Identifizierung des Testobjekts 40 innerhalb des Erfassungsbereichs zu ermöglichen, beispielsweise durch Differenzbildung zwischen dem erzeugten Referenzbild und nachfolgenden Messbildern.

Anschließend kann eine Abfrage erfolgen, in welcher ein Benutzer die groben Maße des nachfolgend zu verwendenden Testobjekts 40 in der Recheneinheit 30 hinterlegen kann. Solche können später zur Verifizierung der weiteren Messungen und der Auswertung dieser dienen. Essentiell ist dieser Schritt jedoch nicht.

Nachfolgend wird ein und dasselbe Testobjekt 40 auf vier unterschiedliche Varianten auf die Förderfläche F der Fördereinheit 10 gelegt und mit der Fördereinheit 10 durch den Erfassungsbereich der Raumsensoren 22 bewegt. Bei jedem Durchlauf erzeugt die Recheneinheit 30 einen entsprechenden Satz von Messdaten aus den Signalen der Raumsensoren 22 und des Geschwindigkeitssensors 14.

Das Testobjekt 40 ist bevorzugt mit drei unterschiedlichen Seitenlängen ausgebildet, also einer Länge, einer Breite und einer Höhe, welche voneinander verschieden sind.

Entsprechend Fig. 3 wird das Testobjekt 40 für einen ersten Messdurchlauf in einer ersten Position (rechts auf der Förderfläche F) in einer ersten Ausrichtung (flach liegend, sodass sich beispielsweise die Höhe des Testobjekts entlang der z-Achse erstreckt, und in einem Winkel von etwa +30 Grad relativ zur Förderrichtung) durch den Erfassungsbereich der Raumsensoren 22 bewegt.

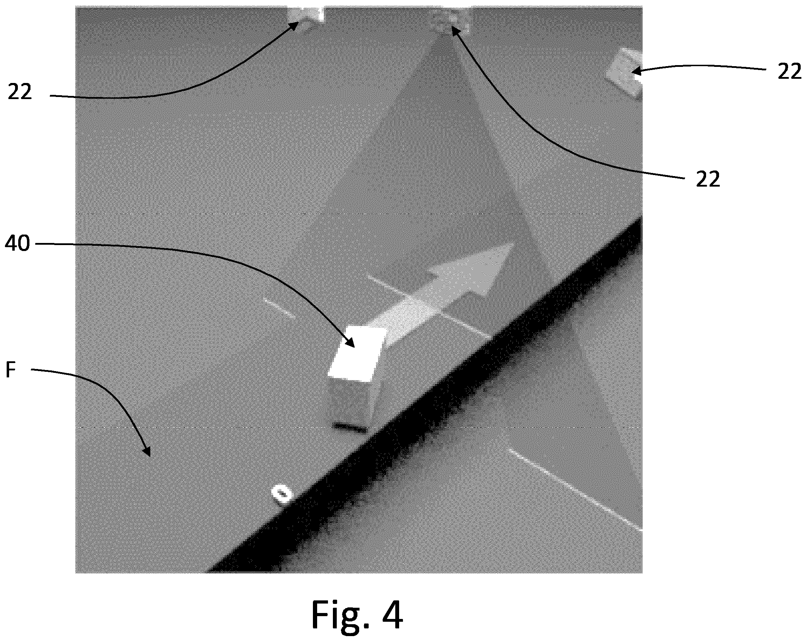

Entsprechend Fig. 4 wird das Testobjekt 40 für einen zweiten Messdurchlauf im Wesentlichen in der ersten Position (rechts auf der Förderfläche F) in einer zweiten Ausrichtung (seitlich, sodass sich beispielsweise die Breite des Testobjekts 40 entlang der z-Achse erstreckt, und in einem Winkel von etwa -30 Grad relativ zur Förderrichtung) durch den Erfassungsbereich der Raumsensoren 22 bewegt.

Entsprechend Fig. 5 wird das Testobjekt 40 für einen dritten Messdurchlauf in einer zweiten Position (links auf der Förderfläche F) in einer dritten Ausrichtung (aufrecht, sodass sich beispielsweise die Länge des Testobjekts 40 entlang der z-Achse erstreckt, und in einem Winkel von etwa +30 Grad relativ zur Förderrichtung) durch den Erfassungsbereich der Raumsensoren 22 bewegt.

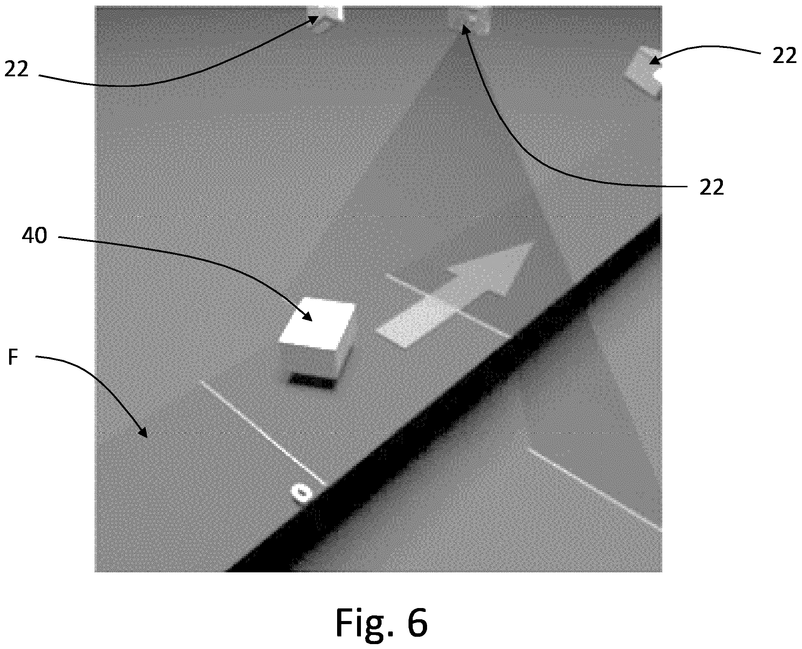

Entsprechend Fig. 6 wird das Testobjekt 40 für einen vierten Messdurchlauf im Wesentlichen in der zweiten Position (links auf der Förderfläche F) in einer vierten Ausrichtung (flach wie in Fig. 3, aber in einem Winkel von etwa -30 Grad relativ zur Förderrichtung) durch den Erfassungsbereich der Raumsensoren 22 bewegt.

Dabei sind die Raumsensoren 22 jeweils in einem Winkel von 45° bis 90°, beispielsweise von 60°, derart auf die Förderfläche F ausgerichtet, dass jeder Raumsensor 22 beim Durchlauf des Testobjekts mindestens zwei, bevorzugt aber drei Seiten des Testobjekts 40 "sieht" bzw. scannt. Um dies sicherzustellen können die Abmessungen für das Testobjekt 40 und/oder die Positionen und Ausrichtungen des Testobjekts 40 für die unterschiedlichen Messdurchläufe speziell ausgewählt bzw. zumindest grob vorgegeben werden bzw. sein.

Die Recheneinheit 30 ist dazu ausgebildet, aus den vier Sätzen von Messdaten der vier Messdurchläufe unter Annahme eines quaderförmigen Testobjekts 40 unter Zuhilfenahme eines mathematischen Optimierungsalgorithmus und vor dem Hintergrund der Referenzdaten ein virtuelles Abbild des Testobjekts 40 zu erzeugen und eine absolute Position und Ausrichtung der Raumsensoren 22 relativ zu dem fiktiven Ursprung 0 zu ermitteln. Dabei ist es auch gleichzeitig möglich, unter Abgleich der Messdaten der Raumsensoren 22 mit den Messdaten des Geschwindigkeitssensors 14 den Korrespondenzfaktor des Geschwindigkeitssensors 14 zu ermitteln.

Hierbei sei angemerkt, dass bereits zwei entsprechende Messdurchläufe ausreichen, um die Ausrichtung der Raumsensoren 22 und/oder den Korrespondenzfaktor des Geschwindigkeitssensors 14 zu ermitteln.

Konkret werden zur Ermittlung der Position und/oder Ausrichtung jedes der Raumsensoren 22 aus den Messdaten die Normalenvektoren dreier unterschiedlicher Seiten des Testobjekts 40 sowie der Ort einer gemeinsamen Ecke dieser drei Seiten ermittelt. Bezugnehmend auf Fig. 3 würden also die Flächennormalen der rechten vorderen kurzen Seite, der linken vorderen langen Seite sowie der großen oberen Seite des Testobjekts, sowie der Ort, an welchem die vordere obere Ecke des Testobjekts 40 den Erfassungsbereich des mittleren Raumsensors 22 durchstößt ermittelt werden. Dies erfolgt für jeden vorgesehenen Raumsensor 22 für jeden einzelnen Messdurchlauf.

Sofern das Testobjekt 40 in allen drei möglichen vertikalen Ausrichtungen vermessen wurde, können aus den z-Werten der jeweiligen oberen Ecke der Messdurchläufe direkt auf die Maße des Testobjekts 40 geschlossen werden.

Aus den aufgenommenen Referenzdaten und Messdaten der unterschiedlichen Messdurchläufe werden mithilfe eines mathematischen Optimierungsalgorithmus unterschiedliche Modelle für die Positionen und Ausrichtung und/oder für den Korrespondenzfaktor durchgespielt und optimiert, um schließlich auf die tatsächliche Positionierung

## EP 4 650 718 A1

und Ausrichtung und/oder den tatsächlichen Korrespondenzfaktor zu schließen.

Der der mathematische Optimierungsalgorithmus kann sich dabei einfacher numerischer Optimierungstechniken bedienen oder speziell eingelernt (insbesondere mittels maschinellem Lernen) sein.

Im Hinblick auf Fig. 7 wird ergänzend zu den obigen Ausführungen darauf hingewiesen, dass es nach einer entsprechenden Kalibrierung möglich ist, mittels eines einfachen statischen Messdurchlaufs (also bei unbewegtem Testobjekt 40) die relative Position der Raumsensoren 22 relativ zu einem weiter vorgesehenen Sensor 50, wie beispielsweise in Gestalt eines Lesegeräts für Codierungen, einer Kamera oder eines Triggersensors, zu ermitteln. Dies ermöglicht eine schnelle, einfache und fehlerfreie Ermittlung der Position P des weiteren Sensors 50.

Die Ergebnisse zur Berechnung der Position und Ausrichtung der Raumsensoren 22 und/oder des Korrespondenzfaktors des Geschwindigkeitssensors 14, ggf. zusammen mit den ermittelten Maßen des Testobjekts 40, können einem Benutzer schließlich angezeigt werden, um von diesem noch einmal gesichtet und anschließen in der Recheneinheit 30 abgelegt zu werden, sofern sich hier keine Ungereimtheiten erkennen lassen. Auch ist es möglich die Recheneinheit 30 selbständig einen Plausibilitätstest vornehmen zu lassen und je nach dessen Ergebnis eine Fehlermeldung auszugeben oder die Kalibrierung unter Übernahme der ermittelten Werte abzuschließen.

Es sei darauf hingewiesen, dass ein derart kalibriertes System in seinem Betrieb nicht per se auf die Analyse von quaderförmigen Objekten beschränkt sein muss, sondern unterschiedlich geformte Objekte analysieren, beispielsweise hinsichtlich ihres Volumens untersuchen, kann. Auch wäre es prinzipiell denkbar Varianten der vorliegenden Erfindung umzusetzen, bei welchen unterschiedliche Testobjekte vermessen werden und/oder nicht-quaderförmige Testobjekte eingesetzt werden können. Es sei darauf hingewiesen, dass derartige Varianten als zur explizit beanspruchten Ausgestaltung äquivalent unter den Schutzbereich der Ansprüche fallen können.

Bezugszeichenliste

|     |                               |
| --- | ----------------------------- |
| 0   | fiktiver Ursprung             |
| 10  | Fördereinrichtung             |
| 12  | Antrieb                       |
| 14  | Geschwindigkeitssensor/ Encoder |
| 20  | Sensorsystem                  |
| 22  | Raumsensor/ LiDAR-Sensor      |
| 30  | Recheneinheit                 |
| 40  | Objekt/ Testobjekt            |
| 50  | weiterer Sensor               |
| 100 | Fördersystem                  |

|   |                                    |
| - | ---------------------------------- |
| F | Förderfläche                       |
| P | fiktive Position des weiteren Sensors |

**Patentansprüche**

1. Verfahren zur Kalibrierung eines Sensorsystems (20) mit wenigstens einem Raumsensor (22) und wenigstens einem Geschwindigkeitssensor (14), insbesondere zur Kalibrierung eines entsprechenden Volumen-Mess-Systems, für Fördereinrichtungen (10), wobei das Verfahren zumindest die folgenden Schritte umfasst:

Aufnahme von Referenzdaten bei einem leeren Erfassungsbereich des Raumsensors (22) mittels des wenigstens einen Raumsensors (22);
Beförderung eines quaderförmigen Testobjekts (40) in einer ersten relativen Position und Ausrichtung durch den Erfassungsbereich des wenigstens einen Raumsensors (22) und Aufnahme eines ersten Satzes entsprechender Messdaten durch den wenigstens einen Raumsensor (22) und den wenigstens einen Geschwindigkeitssensor (14);
Beförderung des quaderförmigen Testobjekts (40) in einer zweiten relativen Position und Ausrichtung durch den Erfassungsbereich des wenigstens einen Raumsensors (22) und Aufnahme eines zweiten Satzes entsprechender Messdaten durch den wenigstens einen Raumsensor (22) und den wenigstens einen Geschwindigkeitssensor (14);
Ermittlung der unterschiedlichen Positionen und Ausrichtungen von zumindest drei Seiten des Testobjekts (40) relativ zu dem wenigstens einen Raumsensor (22) anhand der zwei Sätze der Messdaten vor dem Hintergrund der Referenzdaten;

Ermittlung einer relativen Ausrichtung des wenigstens einen Raumsensors (22) relativ zu den besagten drei Seiten des quaderförmigen Testobjekts (40);
Ermittlung einer absoluten Ausrichtung des wenigstens einen Raumsensors (22) und/oder eines Korrespondenzfaktors für den Geschwindigkeitssensor (14) basierend auf den ermittelten Positionen und Ausrichtungen der zumindest drei Seiten des Testobjekts (40) aus den wenigstens zwei Messdurchläufen mithilfe eines mathematischen Optimierungsalgorithmus.

2. Verfahren nach Anspruch 1,

wobei der wenigstens eine Raumsensor (22) wenigstens zwei, insbesondere zwei oder drei, unterschiedlich positionierte und bevorzugt auch unterschiedlich ausgerichtete, Raumsensoren (22) umfasst, wobei sich die Erfassungsbereiche der besagten Raumsensoren (22) insbesondere schneiden und/oder einander überlappen.

3. Verfahren nach Anspruch 1 oder 2,
wobei der wenigstens eine Raumsensor (22) in einem Winkel zwischen 45° und 90°, beispielsweise in einem Winkel von 60°, auf eine Förderfläche (F) der Fördereinrichtung (10), auf welcher das Testobjekt (40) durch den Erfassungsbereich des wenigstens einen Raumsensors (20) bewegt wird, ausgerichtet ist.

4. Verfahren nach einem der vorhergehenden Ansprüche,

wobei es sich bei dem besagten wenigstens einen Raumsensor (22) um einen oder mehrere LiDAR-Sensoren handelt und/oder
wobei es sich bei dem Geschwindigkeitssensor (14) um einen Encoder handelt, welcher mit einer beweglichen Komponente der Fördereinrichtung (10) gekoppelt ist.

5. Verfahren nach einem der vorhergehenden Ansprüche,

wobei die unterschiedlichen Positionen und Ausrichtungen von drei an einer gemeinsamen Ecke des Testobjekts (40) aufeinander treffenden Seiten des Testobjekts (40) ermittelt werden,
wobei die Ermittlung der Positionen und Ausrichtungen dieser drei Seiten die Identifizierung der Flächennormalen dieser drei Seiten sowie die Identifizierung der relativen Position der gemeinsamen Ecke umfasst,
wobei die unter Bezug genommene gemeinsame Ecke bevorzugt oberhalb einer durch die Förderfläche (F) aufgespannten Förderebene liegt.

6. Verfahren nach einem der vorhergehenden Ansprüche,
wobei das Verfahren umfasst:
die Anforderung und/oder Eingabe der Seitenlängen des quaderförmigen Testobjekts (40).

7. Verfahren nach einem der vorhergehenden Ansprüche,
wobei das Verfahren ferner umfasst:

Beförderung des quaderförmigen Testobjekts (40) in einer dritten relativen Position und Ausrichtung durch den Erfassungsbereich des wenigstens einen Raumsensors (22) und Aufnahme sowie Auswertung eines dritten Satzes entsprechender Messdaten;
wobei die dritte relative Position und Ausrichtung sich zumindest hinsichtlich horizontaler Ausrichtung und/oder horizontaler Position von der ersten und der zweiten relativen Position und Ausrichtung unterscheidet;
wobei bevorzugt die vertikale Ausrichtung aller drei relativen Positionen und Ausrichtungen voneinander verschieden sind und das Verfahren die Ermittlung und/oder Korrektur der Seitenlängen des quaderförmigen Testobjekts (40) anhand der drei Sätze von Messdaten zu den drei unterschiedlichen vertikalen Ausrichtungen des quaderförmigen Testobjekts (40) umfasst.

8. Verfahren nach Anspruch 7,
wobei das Verfahren ferner umfasst:

Beförderung des quaderförmigen Testobjekts (40) in einer vierten relativen Position und Ausrichtung durch den Erfassungsbereich des wenigstens einen Raumsensors (22) und Aufnahme eines vierten Satzes entsprechender Messdaten durch den wenigstens einen Raumsensor (22) und den wenigstens einen Geschwindigkeitssensor (14);

wobei eine absolute Position des wenigstens einen Raumsensors (22) relativ zu einem festgelegten Ursprung auf Basis der Gesamtheit der vier Sätze von Messdaten unter Berücksichtigung der Referenzdaten mithilfe eines mathematischen Optimierungsalgorithmus ermittelt wird.

9. Verfahren nach einem der vorhergehenden Ansprüche,
wobei der Optimierungsalgorithmus eine affine Transformation verwendet und/oder eine Rotation durch Quaternionen darstellt.

10. Verfahren nach einem der vorhergehenden Ansprüche,
wobei der Optimierungsalgorithmus ein Optimierungsproblem löst, wobei das Optimierungsproblem ein Minimierungsproblem umfasst, welches iterativ gelöst wird.

11. Verfahren nach einem der vorhergehenden Ansprüche,
wobei sich die Positionen und Ausrichtungen der unterschiedlichen Messdurchgänge des Testobjekts (40) durch den Erfassungsbereich jeweils um wenigstens, insbesondere genau, zwei aus der horizontalen Ausrichtung, der vertikalen Ausrichtung und der horizontalen Positionierung, voneinander unterscheiden.

12. Verfahren nach einem der vorhergehenden Ansprüche,
wobei die vertikale Positionierung des quaderförmigen Testobjekts (40) durch eine Förderfläche (F) der Fördereinrichtung (10), auf welcher eine Seite des quaderförmigen Testobjekts (40) aufliegt, definiert wird und für alle Messdurchläufe identisch ist.

13. Verfahren nach einem der vorhergehenden Ansprüche,
wobei das Verfahren ferner umfasst:

die Positionierung des quaderförmigen Testobjekts (40) im Erfassungsbereich des wenigstens einen Raumsensors (22) und Aufnahme zugehöriger statischer Messdaten;
Ermittlung der relativen Position des wenigstens einen Raumsensors (22) relativ zu wenigstens einem weiteren Sensor (50), insbesondere in Gestalt eines Lesegeräts, eines Kamera oder eines andersartigen Auslösesensors; und
Ermittlung einer Absolutposition (P) des wenigstens einen weiteren Sensors (50) aus der ermittelten Relativposition des wenigstens einen weiteren Sensors relativ zu dem wenigstens einen Raumsensor (22).

14. Sensorsystem (20), insbesondere Volumen-Mess-System, welches dazu ausgebildet ist, ein Verfahren nach einem der vorangehenden Ansprüche 1 bis 13 auszuführen.

15. Fördersystem (100), mit einer Fördereinrichtung (10) zur Beförderung von Objekten (40) und einem Sensorsystem (20), insbesondere einem Volumen-Mess-System, nach Anspruch 14, welches auf die Fördereinrichtung (10) ausgerichtet ist und dazu ausgebildet ist, Objekte (40), welche durch die Fördereinrichtung (10) befördert werden, zu analysieren.

Fig. 1

Fig. 2

Fig. 3

Fig. 4

Fig. 5

Fig. 6

EP 4 650 718 A1

Fig. 7

**EUROPÄISCHER RECHERCHENBERICHT**

Nummer der Anmeldung

EP 24 17 6717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/220593 A1 (COGNEX CORP [US]) 16. November 2023 (2023-11-16) | 1-8, 10-15 | INV. G01C25/00 |
| Y | * Absätze [0005] - [0008], [0028] - [0094] * | 4,9,10 | G01S7/497 G01S17/42 |
|  | ----- |  | G01S17/89 |
| Y | WO 2020/223594 A2 (KODAK ALARIS INC [US]) 5. November 2020 (2020-11-05) * Seite 6, Zeile 14 - Seite 59, Zeile 31 * ----- | 4,9,10 |  |

**RECHERCHIERTE SACHGEBIETE (IPC)**

G01C
G01S

Der vorliegende Recherchenbericht wurde für alle Patentansprüche erstellt

| Recherchenort | Abschlußdatum der Recherche | Prüfer |
|---|---|---|
| München | 2. Oktober 2024 | Köppl, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 17 6717

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2024

| Im Recherchenbericht angeführtes Patentdokument | Datum der Veröffentlichung | Mitglied(er) der Patentfamilie | Datum der Veröffentlichung |
|---|---|---|---|
| WO 2023220593 A1 | 16-11-2023 | KEINE | |
| WO 2020223594 A2 | 05-11-2020 | CN 114041168 A | 11-02-2022 |
| | | EP 3963414 A2 | 09-03-2022 |
| | | WO 2020223594 A2 | 05-11-2020 |

Für nähere Einzelheiten zu diesem Anhang : siehe Amtsblatt des Europäischen Patentamts, Nr.12/82

EPO FORM P0461